# EUROPEAN PATENT SPECIFICATION

(11) **EP 2 060 538 B1**
(45) Date of publication and mention of the grant of the patent: **31.08.2011**
(21) Application number: 08019736.1
(22) Date of filing: 12.11.2008
(51) Int. Cl.: C01B 33/44

(54) **Clay dispersion, method for manufacturing the same and clay thin film**
Tondispersion, Verfahren zu ihrer Herstellung und Tondünnfilm
Dispersion d'argile, son procédé de fabrication et couche mince en argile

(30) Priority: 13.11.2007 JP 2007294404
(43) Date of publication of application: 20.05.2009
(73) Proprietor: Tomoegawa Co., Ltd., Tokyo (JP)
(72) Inventor: Inoue, Tomohito, Shizuoka-ken (JP); Motegi, Katsumi, Shizuoka-ken (JP); Tsuda, Hajime, Shizuoka-ken (JP)
(74) Representative: Downing, Michael Philip

(56) References cited:
- EP-A- 1 538 183
- WO-A-2007/034772
- JP-A- 2005 104 133

## Description

### Field of the Invention

The present invention relates to a clay dispersion, a manufacturing method for the clay dispersion and a clay thin film.

Priority is claimed on Japanese Patent Application No. 2007-294404, filed November 13, 2007.

### Description of Related Art

A swelling clay such as smectite, which is a typical swelling clay, can form a clay thin film, wherein scale-like grains are arranged to a laminated state, by dispersing the swelling clay in water and drying the dispersion of the swelling clay while it is still standing. The clay thin film has flexibility and has excellent heat resistance since the film is made of inorganic matter. Furthermore, due to the laminar arrangement of the clay thin film, the film can show the maze effect to achieve high gas barrier property and furthermore be an independent film which exists as a film by itself even after the clay thin film is removed from a substrate on which the clay thin film was formed.

Accordingly, such a clay thin film has been recognized in recent years as a flexible substrate usable for solar cells or display devices, due to the excellent gas barrier property and heat resistance thereof. (Refer to the Patent document 1.)

However, ions such as a sodium ion, which have high hydrophilic properties exist on the surface of a swelling clay. It is easy for water to penetrate into a clay thin film obtained from the swelling clay, and therefore the clay thin film is not waterproof. In this way, it is difficult to use a swelling clay as a substrate material because a clay thin film cannot maintain its form when dipped in water.

In order to prevent the penetration of water into a clay thin film obtained from a swelling clay, it is known that an organically modified clay wherein hydrophilic ions existing on the surface of the swelling clay have been exchanged with organic ions can be effectively used. (Refer to the Patent document 2.)
Patent document 1; Japanese Patent No. 3855003
Patent document 2: Japanese Unexamined Patent Application, First Publication, No. 2007-84386

The organically modified clay is generally manufactured by a method wherein ion-exchange is conducted between organic ions and hydrophilic ions existing on the surface of a swelling clay, and subsequently, washing, drying and grinding of the ion-exchanged swelling clay is conducted to obtain a powdered organically modified clay. When a clay thin film is formed from the powdered organically modified clay, the organically modified clay needs to be dispersed in an organic solvent. The dispersion degree of the obtained organically modified clay is changed in accordance with the carbon content of organic ions used in the ion-exchange of the hydrophilic ions. When the carbon content of organic ions is too small, the organically modified clay does not disperse easily in the organic solvent. On the other hand, when the carbon content of organic ions is too large, problems are caused in that heat resistance, which is a characteristic of a swelling clay, becomes poor.

The present invention is achieved in view of the above circumstances, and the purpose of the present invention is to provide a clay dispersion, which can provide a clay thin film having heat resistance and being waterproof, a manufacturing method for the clay dispersion, and a clay thin film.

### SUMMARY OF THE INVENTION

A clay dispersion of the present invention is a clay dispersion, wherein an organically modified clay is dispersed in a polar organic solvent, and the clay dispersion is obtained by: dispersing a swelling clay in a liquid which includes water as a main component; adding organic onium ions to the liquid to make ion-exchange between the organic onium ions and hydrophilic cations existing on the surface of the swelling clay to obtain an organically modified clay; removing the ion-exchanged hydrophilic cation to obtain the organically modified clay which is in a condition that water exists in the clay; and adding the organically modified clay from which the ion-exchanged hydrophilic cation is removed to an polar organic solvent.

It is preferable that the swelling clay of the clay dispersion of the present invention is at least one selected from the group consisting of mica, vermiculite, montmorillonite, iron montmorillonite, beidellite, saponite, hectorite, stevensite, nontronite, magadiite, illite, kanemite, layered titanic acid and smectite.

The polar organic solvent included in the clay dispersion of the present invention preferably includes at least one of dimethyl formamide, dimethyl acetamide, and 1-methyl-2-pyrolidone.

It is preferable that the organic onium ion used in the clay dispersion of the present invention includes at least one of quaternary ammonium, quaternary phosphonium, and imidazolium.

The clay dispersion of the present invention preferably includes at least one of a fiber, which functions in a film for film reinforcement, and a fluid material, which functions in a film to add film flexibility

The manufacturing method of a clay dispersion of the present invention is a method which includes: a first step of dispersing a swelling clay in a liquid which includes water as a main component; a second step of adding organic onium ions to the liquid in which the swelling clay is dispersed to provide ion-exchange between the organic onium ions and hydrophilic cations existing on the surface of the swelling clay to obtain an organically modified clay, and then removing the ion-exchanged hydrophilic cation to obtain an organically modified clay which is in a condition that water exists in the clay; and a third step of adding the organically modified clay, which includes water, to an polar organic solvent and dispersing the organically modified clay in the mixture of polar organic solvent and water.

The clay thin film of the present invention is a clay thin film, which is obtained by volatilizing a polar organic solvent by drying after coating or pouring the aforementioned clay dispersion on a substrate or into a container.

### DETAILED DESCRIPTION OF THE INVENTION

Hereinafter, preferred examples of the invention are explained below.

The purpose of the present invention is to provide a clay dispersion which can provide a clay thin film which achieves heat resistance and is water proof, a manufacturing method for the clay dispersion and a clay thin film.

In the manufacturing method of the present invention, it is possible to obtain the clay dispersion as described above and to form said clay thin film.

### (Clay dispersion)

A clay dispersion of the present invention is obtained as described below. Organic onium ions are added to a liquid, in which a swelling clay is dispersed, in order to cause ion-exchange between the organic onium ions and hydrophilic cations existing on the surface of the swelling clay, thereby obtaining an organically modified clay. Subsequently, the ion-exchanged hydrophilic cation is removed, and then, the organically modified clay, which includes water, is added to a polar organic solvent to obtain a dispersion in which the organically modified clay is dispersed.

### (Swelling clay)

A swelling clay used in the present invention is not limited in particular, and can be selected if necessary. Examples thereof include clay minerals which are natural materials or synthetic materials. Concretely, it is preferable that the swelling clay is at least one selected from mica, vermiculite, montmorillonite, iron montmorillonite, beidellite, saponite, hectorite, stevensite, nontronite, magadiite, illite, kanemite, layered titanic acid, smectite or the like. Among these, hectorite, stevensite and montmorillonite are particularly preferable since they are easily available, the swelling properties are high, and they can be oriented easily by self-organization since they have a flat form and the grain diameter thereof is of the nanometer order. The swelling clay can be used singly or in combination of two or more.

### (Organic onium ion)

Organic onium ions used for the clay dispersion of the present invention are not limited in particular and can be selected if necessary. For example, it is preferable that ions of quaternary ammonium salt, quaternary phosphonium salt or imidazolium salt which have comparatively small molecular weight and a small carbon content are used. Examples of the salt include a tetramethylammonium salt, a tetramethyl phosphonium salt, a methyl ethyl phosphonium salt, and a methyl ethyl imidazolium.

In the present invention, organic onium ions which have a small carbon content means that, among substituents which are bonding to an atom having a positive charge, the carbon content of a substituent which has the largest number of carbon atoms (the number of carbon atom) is 10 or less. It is preferable that the carbon content thereof is 8 or less, more preferably 6 or less, and the most preferably 5 or less. The smaller the carbon content, the better the onium ion used in the present invention. Concrete examples of the preferable substituent include an ethyl group (the carbon content is 2) and a methyl group (the carbon content is 1). Here, when the carbon content of the substituent is 10 or less, it is possible to use a salt which has a small molecular weight.

Hereinafter, substituents which are bonding to an atom having a positive charge are explained concretely below.

In the case of a quaternary ammonium salt, a substituent which has the largest number of carbon atoms among R1 to R4 represented by the following general formula (1) corresponds to the substituent which has the largest number of carbon atoms among substituents which bond to an atom having a positive charge.

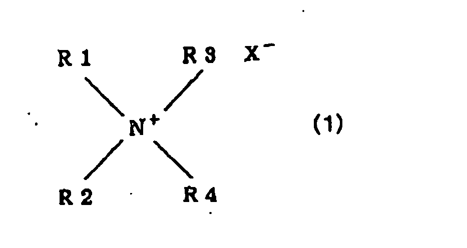

In the case of a quaternary phosphonium salt, a substituent which has the largest number of carbon atoms among R5 to R8 represented by the following general formula (2) corresponds to the substituent which has the largest number of carbon atoms among substituents which bond to an atom having a positive charge.

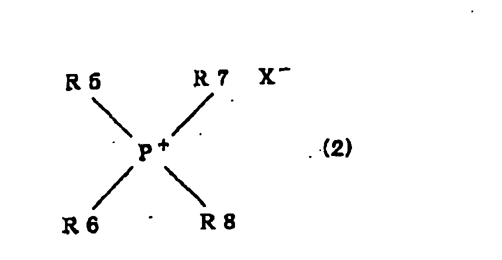

In the case of an imidazolium salt, a substituent which has the larger number of carbon atoms among R9 to R10 represented by the following general formula (3) corresponds to the substituent which has the largest number of carbon atoms among substituents which bond to an atom having a positive charge. Here, the general formula (3) represents an example of the imidazolium salt usable in the present invention, and imidazolium salts usable in the present invention may be represented by other formulae.

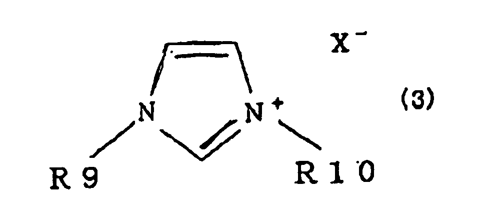

Here, R1 to R10 in the above formulae represent an alkyl group or a phenyl group, and X represents a halogen atom.

### (Polar organic solvent)

A polar organic solvent used for forming the clay dispersion of the present invention is not limited in particular and can be selected if necessary. It is preferable that the polar organic solvent includes at least one of dimethyl formamide, dimethyl acetamide and 1-methyl-2-pyrolidone. Examples of other polar organic solvents which can be preferably used in the present invention include those which can be mixed with water in the ratio of 1 to 1. Examples thereof include alcohols, dimethyl sulfoxide and acetonitrile.

### (Manufacturing method)

A manufacturing method of the clay dispersion of the present invention is characterized in that the method includes:
a first step of dispersing a swelling clay in a liquid which includes water as a main component;
a second step of adding organic onium ions to the liquid in which the swelling clay is dispersed to cause the ion-exchange between the organic onium ions and hydrophilic cations existing on the surface of the swelling clay and to obtain an organically modified clay, and then removing the ion-exchanged hydrophilic cation; and
a third step of adding the organically modified clay, which includes water, to an polar organic solvent and dispersing the organically modified clay in the mixture of the polar organic solvent and water.

(The first step)

The first step is characterized in that a swelling clay is dispersed in a liquid which includes water as a main component.

Here, the liquid which includes water as a main component is a liquid which includes water such as on exchanged water or distilled water in the amount of 70% by mass or more. It is possible to use water as the liquid. In addition to water, the liquid can include another liquid such as dimethyl formamide, dimethyl acetamide, 1-methyl-2-pyrolidone and/or alcohol. The amount of water included in the liquid is preferably 500 to 200000 parts by mass with respect to 100 parts by mass of the welling clay, and more preferably 1000 to 100000 parts by mass. The amount of liquid other than water is preferably 0.1 to 50 parts by mass with respect to 100 parts by mass of the swelling clay, and more preferably 1 to 10 parts by mass.

When the swelling clay is dispersed in the liquid, it is preferable that the dispersion be conducted with a rotary stirrer, a shaking stirrer or the like.

### (The second step)

The second step is characterized in that organic onium ions are added into the liquid, in which the swelling clay is dispersed, in order to cause the ion-exchange between the organic onium ion and a hydrophilic cation existing on the surface of the swelling clay, and obtain an organically modified clay. The ion-exchanged hydrophilic cation is removed after the ion exchange.

The swelling clay used in the present invention includes scale-like grains of an inorganic compound, and the grains can be oriented to form the layered-structure. A hydrophilic cation, which is represented by sodium ion, exists on the surface of the scale-like grain. Said cation can be ion-exchanged with another cation. Accordingly, the ion-exchange is carried out using the organic onium cation to obtain an organically modified clay which can be dispersed in an organic solvent.

The method of the ion exchange can be conducted such that, after the swelling clay is dispersed in the liquid sufficiently to obtain a dispersion (the first step), organic onium ions are added to the dispersion and stirring is conducted with a rotary stirrer or the like until a uniform dispersion is obtained as an organically modified clay. Here, it is preferable that the amount of the organic onium ions are about 1 to 10 times with respect to the ion exchange capacity of the swelling clay, more preferably about 1 to 5 times, and most preferably about 1.1 to 2 times. When the organic onium ion is used in an amount which exceeds 10 times the ion exchange capacity of the swelling clay, the excess amount of organic material is included in a clay thin film formed, and thermal decomposition property of the obtained clay thin film tends to deteriorate. On the other hand, when the organic onium ions are used in an amount less than the ion exchange capacity of the swelling clay, the ion-exchange is conducted insufficiently, sodium ions remain between layers of clay, and a clay film which has insufficient waterproof tends to be generated when the clay thin film is formed. The aforementioned ion exchange capacity may be expressed by the milligram equivalent (meq) of all the exchangerable cations which are preserved in 100 g of a dry clay. The milligram equivalent (meq) can be measured by the ammonium nitrate solution leaching method or the methylene blue adsorption method. Here, "meq/100g" can be represented by "cmol(+)/kg".

After stirring, natural-sedimentation is carried out for the generated organically modified clay, and then the supernatant liquid which includes hydrophilic ions is removed. Examples of the method for removing the supernatant liquid include centrifugal separation and suction filtration.

To the organically modified clay from which the supernatant liquid is removed, 1000 to 10000 parts by mass of water are added based on the 100 parts by mass of the organically modified clay, and stirring is conducted. Subsequently, sedimentation is carried out again for the organically modified clay and the generated supernatant liquid is removed. The aforementioned steps for washing the organically modified clay are repeated several times until the hydrophilic ion concentration in the supernatant liquid becomes 100 ppm or less, and more preferably 1 ppm. It is also possible to use another method in so far as washing can be conducted without problems. As well as the aforementioned method wherein decantation is repeated, for example, a continuous washing method can be used wherein washing water is poured continuously while centrifugal separation or suction filtration is conducted. When the hydrophilic ion concentration exceeds 100 ppm but further washing is not conducted for the organically modified clay, a clay thin film processed from the organically modified clay tends to be insufficiently waterproof.

### (The third step)

In the third step, the organically modified clay obtained in the second step, which includes water, is added to an polar organic solvent, and the organically modified clay is dispersed in the mixture of the polar organic solvent and water to obtain a clay dispersion of the present invention.

Conventionally, a clay dispersion is obtained by the method described below. That is, a generated organically modified clay is dried to remove water completely from the clay and to obtain a solid content, and the solid content is ground to obtain a clay powder. Subsequently, the clay powder is added to an organic solvent in order to expand, that is, in order to swell the clay powder, to obtain a clay dispersion.

In order to make it possible to expand the clay powder in the organic solvent, the conventional method uses ions having a large carbon content, for example, quarternary ammonium salt such as dimethyl distearyl ammonium salt and trimethyl stearyl ammonium salt, as organic onium ions which are used for the ion-exchange. Ions having large carbon content are used in the conventional method because, when the carbon content in the organic onium ions is reduced, swelling of a clay with an organic solvent deteriorate and sufficient dispersion cannot be conducted to obtain a suitably dispersion. Accordingly, when a clay thin film is formed using a conventional clay dispersion, a clay thin film is formed which has poor heat resistance

One characteristic of the present invention is to obtain a clay dispersion without a dry step which is required in the aforementioned conventional method. Concretely, the organically modified clay, which is obtained in the second step and includes water, is added to an polar organic solvent as it is. Furthermore, the added organically modified clay is swelled and dispersed in the mixture of the polar organic solvent and water to obtain a clay dispersion of the present invention. Here, the amount of polar organic solvent is preferably 50 to 10000 parts by mass with respect to 100 parts by mass of a organically modified clay, and more preferably 500 to 1000 parts by mass. When the amount of a polar organic solvent exceeds 10000 parts by mass, the solid content decreases, viscosity of the dispersion becomes insufficient and it tends to be difficult to form a film. On the other hand, when the amount of a polar organic solvent is less than 50 parts by mass, an organically modified clay cannot disperse sufficiently, the viscosity of the dispersion becomes high, and the formation of an uniform clay thin film tends to be difficult.

Furthermore, when the organically modified clay is swelled in the mixture of the polar organic solvent and water, it is possible to add a fiber, which can function in a film for film reinforcement, and a fluid material, which can function in a film to add film flexibility, in the clay dispersion of the present invention.

The film reinforcement achieved by the fiber means that mechanical hardness, that is, properties such as tensile strength, are added to a clay thin film formed from a clay dispersion. Preferable examples of the fiber usable for a clay dispersion include inorganic fibers such as a carbon fiber, an alumina fiber, a boron fiber, silicon carbide fiber and potassium titanate fiber, and fibers such as an aramid fiber, polybenzoxazole fiber, an ultrahigh molecular weight polyethylene fiber, a polyester fiber, a polyimide fiber, a polyamide fiber, a polyvinyl alcohol fiber and a cellulose fiber. It is preferable that the fiber is contained in the dispersion in the amount of 0.1 to 10% by mass with respect to the amount of clay, and more preferably 1 to 8% by mass. The fiber may be used singly or in combination of two or more.

The film flexibility achieved by the fluid material means that a clay thin film formed from a clay dispersion can be used as a substrate, which needs to have flexibility, due to the fluid material.

Preferable examples of the fluid material include various fluid materials and resins such as epoxy resins, a polyimide resin, a silicone resin, a silicone oil and phosphoric acid ester. It is preferable that the fluid material is contained in the dispersion in the amount of 0.1 to 10% by mass with respect to the amount of clay, and more preferably 1 to 8% by mass.

The materials used for reinforcement and flexibility are not limited in particular in the present invention

### (Clay thin film)

A clay thin film of the present invention includes a clay as a main component. The clay thin film can be preferably obtained by coating a clay dispersion on a substrate or pouring a clay dispersion into a container, and then drying the dispersion to volatilize a polar organic solvent included in the clay dispersion.

Here, the substrate used for forming the thin film is not limited in particular. The substrate can be selected if necessary in so far as the substrate has the flat surface, does not cause deformation at the drying temperature of a clay, and can be peeled from a dried clay thin film. Among the substrates, a polyethylene terephthalate film, which is comparatively inexpensive and is easy to use, is preferably used as a substrate. On the other hand, as the container used for forming the thin film, a container coated with a fluororesin is preferably used.

Concrete examples of the method for forming a film are described below. First, the prepared clay dispersion is coated on a substrate with an applicator or the like, or is poured in a container. Subsequently, the dispersion is dried preferably with a hot-air circulation type electric dryer or the like to obtain a clay thin film. Here, the thickness of a clay dispersion which has been coated or poured is preferably 100 to 5000 µm. The preferable range of said thickness of a clay dispersion can be changed in accordance with the solid concentration of a coating to be coated. It is preferable that the thickness of a clay dispersion after coating or pouring is adjusted so that the film thickness of a clay film after drying becomes 10 to 200 µm. When the film thickness of a clay film after drying is 10 µm or more, it is possible to use the dried film as a independent film. When the film thickness after drying is less than 10 µm, the mechanical strength of the dried film deteriorates, and breakage of the dried film tends to be caused easily. The preferable upper limit of the thickness can be determined in accordance with the characteristics required.

The obtained clay thin film preferably includes 70% by mass or more of the organically modified clay component, and more preferably 80% by mass or more. It is also possible that the clay thin film include 100% by mass of an organically modified clay. When the clay component is included in an amount of less than 70% by mass, characteristics which are essentially given to a clay, such as heat resistance, low liner expansion property and gas barrier property, may deteriorate.

The obtained clay thin film can be separated from the substrate to obtain an independent film. The separated clay film can be used for; a film substrate for liquid crystal or organic electroluminescence display, a substrate for an electronic paper, a sealing film for an electronic device, a lens film, a film for a light guide, a prism film, a film for a phase difference plate or a polarizer, a viewing angle correction film, a film for PDP, a film for LED, a member for optical communication, a film for a touch panel, a substrate for various functional films, a film for an electric equipment which has structure wherein the interior thereof can be shown through such as transparent structure, a film for optical recording media such as a video disk, CD, CD-R, CD-RW, DVD, MO, MD, a phase change disk and an optical card, a sealing film for a fuel cell and a film for a solar cell.

When the separated clay thin film does not have transparency, the clay thin film can be used for a material for industrial equipment such as a seal material, a packing material, a substrate for electronic circuit, a flame retardant sheet or a radiating member.

A clay thin film of the present invention can be used as an independent film singly even if the film is separated from the substrate. However, on a surface or both surfaces of the clay thin film, a mono-layer or plural-layers of an organic thin film and/or an inorganic thin film can be provided in order to achieve excellent gas barrier properties, chemical resistance, surface smoothness and the like.

The type of film which is provided on the surface of the clay thin film is not limited in particular. The optimum film can be selected in accordance with the application thereof. For example, when a film of a silicon oxide (SiOₓ) or silicon nitride oxide is provided on a clay thin film by a plasma CVD method or a sputtering method, it is possible to provide high gas barrier properties and chemical resistance to the clay thin film.

Furthermore, when an organic polymer is coated on a clay thin film as the organic thin film, it is possible to achieve the surface smoothness. When a hard coat layer is provided on a clay thin layer, it is possible to provide a hard-coat properties. In this way, due to the lamination of an inorganic and/or organic thin film on the surface of the clay thin film, it is possible to add to a clay thin film additional properties, which could not be achieved if the clay thin film were used singly.

When a clay thin film of the present invention is prepared, general and various additives such as a curing aid, an antioxidant, a surfactant, a pigment, a leveling agent or the like can be added in a clay dispersion.

In the present invention, a dry step which is required in the conventional method is omitted when an organically modified clay is swelled and dispersed in a organic solvent, and furthermore, a polar organic solvent is used as a organic solvent. Accordingly, an organically modified clay, wherein the carbon content is small, can be swelled and dispersed in an organic solvent in the present invention. Furthermore, since an organic onium ion which has a small carbon content is used to form an organically modified clay, both of waterproof and heat resistance can be achieved regarding a clay dispersion and a clay thin film formed from the clay dispersion.

### Examples

Hereinafter, the present invention is explained concretely using examples, but the present invention is not limited only to the examples. Addition of structural materials, omissions, substitutions, and other changes are possible within the scope of the present invention as defined by the claims.

Evaluations for each property of Examples and Comparative examples are conducted by the methods shown below.

Thermo Gravimetry / Differential Thermal Analysis (DTA-TG analysis)

Weight variation was measured in air while the temperature was increased in the range from the room temperature to 600°C at the rate of 5°C per minute with an analyzer (trade name: EXSTAR6000 STATION, version: TG/DTA6200, manufactured by Seiko Instruments Inc.). The change rate (DTG) of the weight variation was plotted for each temperature, and the point of inflection was determined as a decomposition temperature.

### Example 1

5 g of a swelling clay (synthetic hectorite, trade name: Lucentite SWF, cation exchange capacity (CEC): 95 meq/100g, manufactured by Co-op chemical Co., Ltd.) were added to 500g of ion exchanged water, and dispersed and swelled with a magnetic stirrer to obtain a dispersion.

Subsequently, 1.25 g of methyl ethyl imidazolium bromide (the amount of an organic onium ion thereof is 1.5 times with respect to cation exchange capacity of the swelling clay in the aforementioned dispersion, and the carbon content of methyl ethyl imidazolium bromide is 2) were added to the dispersion and stirred for one hour. After stirring was stopped, the generated aggregate was settled. The volume of the generated aggregate after settling was about 200 cc and the generated supernatant fluid was transparent.

Then the supernatant fluid was removed, and the aggregate was placed into a 250 cc plastic container, and water content was further separated with a centrifugal separator (centrifuge condition: 3000 rotations per 10 minutes).

The generated supernatant fluid was further removed, and ion exchanged water was added so that the total amount became 250 cc, and the aggregate and ion exchange water was stirred. After the stirring, solid-liquid separation was conducted again with the centrifugal separator under the same conditions as those described above to separate the water content, and the generated separated supernatant fluid was removed again. The aforementioned steps of stirring and centrifugation were conducted repeatedly until the sodium ion concentration in a supernatant fluid became 1 ppm or less.

The aggregate obtained by the aforementioned operation was a gel-like water-bearing material wherein the solid content thereof was 10%. 60 g of dimethyl formamide were added to 50 g of the gel-like water-bearing material, and dispersion of the mixture was conducted for 30 minutes with a homogenizer at 7000 rpm to obtain a transparent and colorless clay dispersion.

Next, the obtained dispersion was coated with an applicator on a polyethylene terephthalate film (trade name: EMBLET, thickness: 38 µm, manufactured by Unitika.Ltd., hereinafter, the film may be described as a PET film). The PET film on which the clay dispersion was coated was provided into a dryer at the temperature of 100°C to remove the solvent content in the coated film. Then, a clay thin film which was an independent film was obtained by separating it from the PET film. In order to further remove the solvent remaining in the separated clay thin film, dry processing was further conducted at a temperature of 170°C for one hour. The clay thin film obtained after the dry processing was a transparent and flexible thin material having the thickness of 30 µm.

DTA-TG analysis was conducted for the clay thin film, and it was shown that thermal decomposition thereof was started at about 300°C.

Furthermore, the clay thin film was cut into a 5 cm square and immersed in 200 cc of ion exchanged water for an hour. Then, the square was taken out from ion exchanged water with tweezers, it was observed that the square maintained its form after the immersion.

### Example 2

Similar to Example 1, a transparent and colorless clay dispersion was obtained except that the swelling clay used in Example 1 was changed to a refined natural montmorillonite (trade name: KUNIPIA G, cation exchange capacity (CEC): 115 meq/100g, manufactured by kunimine industries Co., Ltd.) and the amount of methyl ethyl imidazolium bromide was changed to 1.5 g (the amount of an organic onium ion thereof is 1.5 times the cation exchange capacity of the swelling clay in the aforementioned dispersion).

Furthermore, using the obtained transparent and colorless clay dispersion, a clay thin film which was an independent film was obtained similar to Example 1. After drying the film at a temperature of 170°C for one hour, a transparent and flexible thin material having a thickness of 30 µm was obtained.

When DTA-TG analysis was conducted for the clay thin film, it was shown that thermal decomposition thereof was started at about 300°C.

Furthermore, the clay thin film was cut into a 5 cm square and immersed in 200 cc of ion exchanged water for an hour. Then, the square was taken out from ion exchanged water with tweezers, and it was observed that the square maintained its form after the immersion.

### Example 3

Similar to Example 2, a transparent and colorless clay dispersion was obtained except that tetramethylammonium bromide (added amount: 0.8 g, the amount of an organic onium ion thereof is 1.5 times with respect to cation exchange capacity of the swelling clay in the aforementioned dispersion, and the carbon content of tetramethylammonium bromide is 1) was used instead of methyl ethyl imidazolium bromide.

Furthermore, using the obtained transparent and colorless clay dispersion, a clay thin film which was an independent film was obtained similar to Example 1. After drying the film at a temperature of 170°C for one hour, a transparent and flexible thin material having a thickness of 30 µm was obtained.

When DTA-TG analysis was conducted for the clay thin film, it was shown that thermal decomposition thereof was started at about 220°C.

Furthermore, the clay thin film was cut into a 5 cm square and immersed in 200 cc of ion exchanged water for an hour. Then the square was taken out from ion exchanged water with tweezers, and it was observed that the square maintained its form after the immersion.

### Example 4

Similar to Example 1, a transparent and colorless clay dispersion was obtained except that 0.1 g of glass fibers having the fiber diameter of 100 nm were added simultaneously at the time of adding dimethyl formamide.

Furthermore, using the obtained transparent and colorless clay dispersion, a clay thin film which was an independent film was obtained similar to Example 1. After drying the film at a temperature of 170°C for one hour, a transparent and flexible thin material having a thickness of 30 µm was obtained.

When DTA-TG analysis was conducted for the clay thin film and it was shown that thermal decomposition thereof was started at about 300°C.

Furthermore, the clay thin film was cut into a 5 cm square and immersed in 200 cc of ion exchanged water for an hour. Then the square was taken out from ion exchanged water with tweezers, and it was observed that the square maintained its form after the immersion.

### Comparative Example 1

The gel-like water-bearing material which was obtained after repeating the steps of stirring and centrifuge in Example 1 was dried at 120°C until the water content rate thereof became 0.1%. Subsequently, the dried material was ground to the size of about 50 µm with a cutter mill to obtain a clay solid. Then, 5 g of the obtained clay solid were added to 100 g of dimethyl formamide, and dispersion was conducted for 30 minutes with a homogenizer under the condition of 7000 rpm to obtain a milky solution in which a part of the solid content was settled.

Next, the obtained milky solution was coated with an applicator on a PET film. The coated PET film was provided into a dryer at a temperature of 100°C, and the solvent content was removed from the coated film. However, a scattered white powder merely existed on the PET film, and a clay thin film was not obtained. The white powder was collected, and dry processing was conducted at a temperature of 170°C for one hour in order to further remove the solvent content therein. As the result, a sold clay was obtained.

DTA-TG analysis was conducted for the solid clay, and it was shown that thermal decomposition thereof was started at about 300°C.

### Comparative Example 2

Preparation was conducted similar to Comparative Example 1 except that a mixed solution of 45 g of ion exchanged water and 60 g of dimethyl formamide was used instead of 100 g of dimethyl formamide used in Comparative Example 1, and a milky solution in which a part of the solid content settled was obtained.

After the obtained milky solution was processed in order to form a clay thin film similar to Comparative Example 1, a scattered white powder merely existed on the PET film, and a clay thin film was not obtained. The white powder was collected, and dry processing was conducted at a temperature of 170°C for one hour in order to still further remove the solvent content therein. As the result, a solid clay was obtained. DTA-TG analysis was conducted for the solid clay, and it was shown that thermal decomposition thereof was started at about 300°C.

### Comparative Example 3

Preparation was conducted similar to Comparative Example 1 except that a refined natural montmorillonite was used instead of the swelling clay used in Comparative Example 1, and a milky solution, in which a part of the solid content was settled and the settled solid was brown, was obtained.

After the obtained milky solution was processed in order to form a clay thin film similar to Comparative Example 1, a scattered powder merely existed on the PET film, and a clay thin film was not obtained. The powder was collected, and dry processing was conducted at a temperature of 170°C for one hour in order to further remove the solvent content therein. As the result, a solid clay was obtained. DTA-TG analysis was conducted for the solid clay, and it was shown that thermal decomposition thereof was started at about 300°C.

### Comparative Example 4

Preparation was conducted similar to Comparative Example 3 except that tetramethyl ammonium bromide was used instead of methyl ethyl imidazolium bromide used in Comparative Example 3, and a milky solution, in which a part of the solid content was settled and the settled solid was brown, was obtained.

After the obtained milky solution was processed in order to form a clay thin film similar to Comparative Example 3, a scattered powder merely existed on the PET film, and a clay thin film was not obtained. The powder was collected, and dry processing was conducted at a temperature of 170°C for one hour in order to further remove the solvent content therein. As the result, a solid clay was obtained.

DTA-TG analysis was conducted for the solid clay, and it was shown that thermal decomposition thereof was started at about 220°C.

### Comparative Example 5

Preparation was conducted similar to Comparative Example 1 except that tributhyl dodecyl ammonium bromide (added amount: 2.8 g, the amount of an organic onium ion thereof is 1.5 times the cation exchange capacity of the swelling clay in the dispersion, and the carbon content of tributhyl dodecyl ammonium bromide is 12) was used instead of the methyl ethyl imidazolium bromide used in Comparative Example 1, and a transparent and colorless clay dispersion was obtained.

Furthermore, using the obtained transparent and colorless clay dispersion similar to Comparative Example 1, a clay thin film which was an independent film was obtained. After drying the film at a temperature of 170°C for one hour, a transparent and flexible thin material having a thickness of 30 µm was obtained.

When DTA-TG analysis was conducted for the clay thin film, it was shown that thermal decomposition thereof was started at about 160°C.

### Comparative Example 6

5 g of refined natural montmorillonite (trade name: KUNIPIA G, cation exchange capacity (CEC) : 115 meq/100g, manufactured by Kunimine Industries Co., Ltd.) were added to 100 g of ion exchanged water, and dispersion was conducted for 30 minutes with a homogenizer at 7000 rpm to obtain a transparent and brown clay dispersion.

Furthermore, using the obtained clay dispersion similar to Comparative Example 1, a clay thin film which was an independent film was obtained. After drying the film at the temperature of 170°C for one hour, a brown and flexible thin material having a thickness of 30 µm was obtained.

Furthermore, the clay thin film was cut into a 5 cm square and immersed in 200 cc of ion exchanged water for an hour. Then, it was taken out from ion exchanged water with tweezers, and was observed that the square broke to pieces and could not maintain its form after the immersion.

In Examples 1 to 4, the obtained organically modified clay was dispersed in the organic solvent without a drying step. Accordingly, it was possible to form a clay film even if said organically modified clay was formed with an organic onium salt which had a small carbon content. The clay thin films obtained in Examples 1 to 4 were excellent in heat resistance and were waterproof. In the conventional method, a clay thin film was not obtained when such an organic onium salt having small carbon content was used.

On the other hand, in Comparative Examples 1 to 4, the obtained organically modified clay, which was formed with an organic onium salt having a small carbon content, was dried at first, and then dispersed in the organic solvent. Although excellent heat resistance was achieved for the dried organically modified clay of Comparative Examples 1 to 4, a clay thin film was not generated. In Comparative Example 5, the organic onium salt having a large carbon content was used to form the organically modified clay, and the organically modified clay was dried and then dispersed in the organic solvent. Although a clay thin film was formed in Comparative Example 5, but heat resistance was not achieved. In Comparative Example 6, the clay dispersion was used in which ion-exchange between the organic onium ions and hydrophilic cations existing on the surface of the swelling clay was not conducted. Accordingly, although a clay thin film was formed in Comparative Example 6, but waterproofing was not achieved.

### INDUSTRIAL APPLICABILITY

The clay dispersion and the clay thin film of the present invention can be used for various products due to excellent clay characteristics. For example, they can be used for a film substrate for liquid crystal or organic electroluminescence display, a substrate for an electronic paper, a sealing film for an electronic device, a lens film, a film for a light guide, a prism film, a film for a retardation film or a polarizer, a viewing angle correction film, a film for PDP, a film for LED, a member for optical communication, a film for a touch panel, a substrate for various functional films, a film for electric equipment which has structure wherein the interior thereof can be shown through, a film for optical recording media such as a video disk, CD, CD-R, CD-RW, DVD, MO, MD, a phase change disk and an optical card, a sealing film for a fuel cell and a film for a solar cell.

## Claims

1. A clay dispersion, wherein an organically modified clay is dispersed in a polar organic solvent, and the clay dispersion is obtained by:
dispersing a swelling clay in a liquid which includes water as a main component;
adding organic onium ions to the liquid to cause ion-exchange between the organic onium ions and hydrophilic cations existing on the surface of the swelling clay to obtain an organically modified clay;
removing the ion-exchanged hydrophilic cation to obtain the organically modified clay which is in a condition that water exists in the clay; and
adding the organically modified clay from which the ion-exchanged hydrophilic cation is removed to a polar organic solvent.

2. The clay dispersion according Claim 1, wherein the swelling clay is at least one selected from the group consisting of mica, vermiculite, montmorillonite, iron montmorillonite, beidellite, saponite, hectorite, stevensite, nontronite, magadiite, illite, kanemite, layered titanic acid and smectite.

3. The clay dispersion according Claim 1, wherein the polar organic solvent include at least one of dimethyl formamide, dimethyl acetamide and 1-methyl-2-pyrolidone.

4. The clay dispersion according Claim 1, wherein the organic onium ions includes at least one of quaternary ammonium, quaternary phosphonium and imidazolium.

5. The clay dispersion according Claim 1, wherein the clay dispersion includes at least one of a fiber, which functions in a film for film reinforcement, and a fluid material, which functions in a film to add film flexibility.

6. A manufacturing method of a clay dispersion, which includes:
a first step of dispersing a swelling clay in a liquid which includes water as a main component;
a second step of adding organic onium ions to the liquid in which the swelling clay is dispersed to provide ion-exchange between the organic onium ions and hydrophilic cations existing on the surface of the swelling clay to obtain an organically modified clay, and then removing the ion-exchanged hydrophilic cation to obtain an organically modified clay which is in a condition that water exists in the clay; and
a third step of adding the organically modified clay, which includes water, to a polar organic solvent and dispersing the organically modified clay in the mixture of polar organic solvent and water.

7. A clay thin film, which is obtained by volatilizing the polar organic solvent by drying after coating or pouring the clay dispersion according to Claim 1 on a substrate or into a container.

## Patentansprüche

1. Tondispersion, wobei ein organisch modifizierter Ton in einem polaren organischen Lösungsmittel dispergiert wird und die Tondispersion durch Folgendes erhalten wird:
Dispergieren eines Quelltons in einer Flüssigkeit, die Wasser als eine Hauptkomponente einschließt;
Hinzufügen organischer Oniumionen zur Flüssigkeit, um einen Ionenaustausch zwischen den organischen Oniumionen und hydrophilen Kationen zu bewirken, die auf der Oberfläche des Quelltons vorhanden sind, um einen organisch modifizierten Ton zu erhalten;
Entfernen des Ionenausgetauschten hydrophilen Kations, um den organisch modifizierten Ton zu erhalten, der sich in einem Zustand befindet, dass Wasser im Ton vorhanden ist; und
Hinzufügen des organisch modifizierten Tons, aus dem das ionenausgetauschte hydrophile Kation entfernt ist, zu einem polaren organischen Lösungsmittel.

2. Tondispersion nach Anspruch 1, wobei der Quellton zumindest einer ist, der aus der Gruppe selektiert wurde, die aus Glimmer_{,} Vermicullt; Montmorillonit, Eisen-Montmoroillonit, Beldellit, Saponit, Hectorit, Stevensit, Nontronit, Magadiit, Illit, Kanemit, lamellare Titansäure und Smektit besteht.

3. Tondispersion nach Anspruch 1, wobei das polare organische Lösungsmittel zumindest eins von Dimethylformamid, Dimethylacetamid und 1-Methyl-2-pyrrolidon einschließt.

4. Tondispersion nach Anspruch 1, wobei die organischen Oniumionen zumindest eins von quartärem Ammonium, quartärem Phosphonium und Imidazolium einschließen.

5. Tondispersion nach Anspruch 1, wobei die Tondispersion zumindest eine von einer Faser, die in einer Schicht zur Schichtverstärkung fungiert, und ein fluides Material einschließt, das in einer Schicht fungiert, um Schichtflexibilität hinzuzufügen.

6. Herstellungsverfahren einer Tondispersion, das einschließt:
einen ersten Schritt der Dispersion eines Quelltons in einer Flüssigkeit, die Wasser als eine Hauptkomponente einschließt;
einen zweiten Schritt des Hinzufügens von organischen Oniumionen zur Flüssigkeit, in welcher der Quellton dispergiert wird, um Ionenaustausch zwischen den organischen Oniumionen und hydrophilen Kationen bereitzustellen, die auf der Oberfläche des Quelltons vorhanden sind, um einen organisch modifizierten Ton zu erhalten und danach Entfernen des ionenausgetauschten hydrophilen Kations, um einen organisch modifizierten Ton zu erhalten, der sich in einem Zustand befindet, dass Wasser im Ton vorhanden ist; und
einen dritten Schritt des Hinzufügens des organisch modifizierten Tons, der Wasser einschließt, zu einem polaren organischen Lösungsmittel und Dispergieren des organisch modifizierten Tons in der Mischung von polarem organischem Lösungsmittel und Wasser.

7. Dünnschicht aus Ton, die durch Verflüchtigen des polaren organischen Lösungsmittels durch Trocknen nach Beschichten oder Gießen der Tondispersion nach Anspruch 1 auf ein Substrat oder in einen Behälter erhalten wird.

## Revendications

1. Une dispersion d'argile, dans le cadre de laquelle une argile ayant subi une modification organique est dispersée dans un solvant organique polaire, la dispersion de l'argile étant réalisée par
la dispersion d'une argile gonflante dans un liquide, dont l'eau est la principale composante ;
l'adjonction dans le liquide d'ions d'onium organiques, afin de donner lieu à un échange d'ions entre les ions d'onium organiques et des cations hydrophiles sur la surface de l'argile gonflante, de façon à obtenir une argile à modification organique ;
l'extraction du cation hydrophile à échange d'ions pour obtenir l'argile à modification organique qui se présente dans un état comportant la présence d'eau dans l'argile ; et
l'adjonction de l'argile à modification organique de laquelle le cation hydrophile à échange d'ion est extrait dans un solvant organique polaire.

2. La dispersion d'argile conforme à la revendication 1, dans laquelle l'argile gonflante est au moins une des argiles appartenant au groupe composé de mica, vermiculite, montmorillonite, montmorillonite de fer, beidellite, saponite, hectorite, stevensite, nontronite, magadiite, illite, kanemite, acide titanique stratifié et smectite.

3. La dispersion d'argile conforme à la revendication 1, dans laquelle le solvant organique polaire comprend au minimum un des suivants : diméthylformamide, dlméthylacétamide et 1-méthyl-2-pyrolidone.

4. La dispersion d'argile conforme à la revendication 1, dans laquelle les ions d'onium organiques comprennent au moins un des suivants : ammonium quaternaire, phosphonium quaternaire, et imidazolium.

5. La dispersion d'argile conforme à la revendication 1, dans laquelle la dispersion d'argile comporte au minimum une fibre fonctionnant dans un film pour le renforcement du film, et une matière fluidique agissant pour un film ou en renforcer la flexibilité.

6. Une méthode de fabrication d'une dispersion d'argile, comprenant :
une première phase de dispersion d'une argile gonflante dans un liquide dont l'eau est la principale composante ;
une deuxième phase comportant l'adjonction, dans le liquide dans lequel a lieu la dispersion de l'argile gonflante, d'ions d'onium organiques, afin de donner lieu à un échange d'ions entre les ions d'onium organiques et des cations hydrophiles présents sur la surface de l'argile gonflante, de façon à obtenir une argile à modification organique, puis l'extraction du cation hydrophile à échange d'ions pour obtenir une argile à modification organique qui se présente dans un état comportant la présence d'eau dans l'argile ; et
une troisième phase comportant l'adjonction de l'argile à modification organique, comprenant de l'eau, un solvant organique polaire, et la dispersion de l'argile à modification organique dans le mélange de solvant organique polaire et d'eau.

7. Un film d'argile de faible épaisseur, obtenu en volatilisant le solvant organique polaire par séchage après revêtement ou en versant la dispersion d'argile conformément à la revendication 1 sur un substrat ou dans un récipient.
